# EUROPEAN PATENT APPLICATION

(11) **EP 4 789 589 A1**
(43) Date of publication of application: **12.08.2026**
(21) Application number: 26152282.5
(22) Date of filing: 16.01.2026
(51) Int. Cl.: A47J 31/44

(54) **COFFEE MACHINE WITH DISPLAY SYSTEM OF COFFEE DISPENSING AND MILK FROTHING PARAMETERS**

(30) Priority: 11.02.2025 IT 202500002571
(71) Applicant: SIMONELLI GROUP S.P.A., 62020 Belforte del Chienti (MC) (IT)
(72) Inventor: CINGOLANI, Claudio Enrico, 62032 CAMERINO (MC) (IT); FELIZIANI, Marco, 62029 TOLENTINO (MC) (IT); PARRINI, Mauro, 63821 PORTO SANT'ELPIDIO (FM) (IT)
(74) Representative: Cutropia, Gianluigi

(57) **Abstract**

A coffee machine (100) comprises a dispensing unit (1), a supporting surface (60) of a frame of the coffee machine disposed under the dispensing unit to accommodate a cup (7) in such a way that the coffee dispensed by the dispensing unit (1) falls into the cup, a control unit (3) configured to control the dispensing parameters (Pe) indicative of coffee dispensing, a user interface (4) comprising a keypad (41) for controlling the dispensing unit, and a coffee projector (8) disposed in the frame of the coffee machine and operatively connected to the control unit (3) so as to project at least one dispensing parameter (Pe) in a position included in a detailed visual field (V) of the operator centered on the cup (7) disposed on the supporting surface (60) under the dispensing unit.

## Description

The present invention relates to a coffee machine provided with a display system of coffee dispensing and milk frothing parameters.

Increasing attention is being paid to the ergonomics of coffee machines in order to facilitate the operator's daily and continuous work in front of the coffee machine for the preparation of coffee and cappuccino. In addition, food chains and restaurants increasingly require short preparation times for beverages. Therefore, the beverage preparation process must be as straightforward as possible and must not lead to errors.

Coffee machines are commonly equipped with at least two filter holders for dispensing the coffee, which contain at least two different types of filters wherein the ground coffee is inserted for beverage preparation. In addition, coffee machines have one or two steam wands for dispensing the steam used to heat milk for the preparation of hot milk with varying amounts of foam to prepare different milk-based beverage recipes.

Systems for the automation of coffee dispensing and milk preparation are more and more frequently incorporated into coffee machines, but there are still some situations in which the operator wants to control the coffee machine and work manually by manually stopping the coffee dispensing or milk frothing. However, this should not affect the final product or cause stress on the operator when working with the coffee machine, even if the operator chooses a more traditional and manual working method.

While preparing the coffee and frothing the milk, the operator must control two types of parameters in order to stop dispensing the coffee and frothing the milk at the right moment, namely:
- coffee dispensing parameters during the dispensing of liquid coffee into a cup, and
- milk frothing parameters during the heating and steaming of the milk contained in a jug.

The dispensing parameters may comprise the dispensing time of liquid coffee and the weight of liquid coffee in the cup during dispensing.

The frothing parameters may comprise the temperature of the milk in the jug, the time of steam injection into the milk contained in the jug, and the frothing degree that depends on the amount of air supplied to the steam wand.

The coffee dispensing and milk frothing parameters are generally displayed on a screen located in an upper portion of the frame of the coffee machine above the dispensing unit and steam wand.

However, when dispensing the coffee or heating the milk, the operator is busy watching the liquid coffee falling into the cup and the milk being heated in the jug. Since the cup and jug are well below the display, the operator has difficulty in reading the coffee dispensing and milk frothing parameters on the display, with the result that these parameters are generally neglected to the detriment of the quality of the beverage to be prepared.

CN203059373U describes a coffee maker with projector display function.

DE102016100949A1 describes an electrical household appliance with a user interface comprising a projection unit configured to project a representation onto a surface outside the household appliance.

US2017/340163A1 describes a steam show device for beverage making apparatus for producing steam that is delivered by a nozzle with an effect similar to that of a dancing fountain.

The purpose of the present invention is to eliminate the drawbacks of the prior art by providing a coffee machine provided with a display system of the coffee dispensing and milk frothing parameters that is practical and easily consultable by the operator.

Another purpose is to provide such a coffee machine with a display system of the dispensing and milk frothing parameters that is reliable and simple to make and use.

These purposes are achieved in accordance with the invention with the characteristics of the attached independent claim 1.

Advantageous embodiments of the invention appear from the dependent claims.

The coffee machine according to the invention is defined in claim 1.

The purpose of the coffee machine according to the invention is to facilitate the control of at least one coffee dispensing parameter with a projector to project the coffee dispensing parameter onto a front part of the frame of the coffee machine behind the coffee cup or onto a front part of the coffee cup so that the operator can simultaneously see the coffee falling into the cup and the dispensing parameter projected onto the front part front of the frame or on the front of the cup.

Similarly, another purpose of the coffee machine is to facilitate the control of at least one milk frothing parameter with a projector to project the frothing parameter onto a front part of the frame of the coffee machine behind the jug or onto a front part of the jug or onto the surface of the milk contained in the jug, allowing the operator to see the milk and the formation of the foam and control the frothing parameters at all times.

Further features of the invention will become clearer from the following detailed description, which refers to a purely illustrative and therefore non-limiting embodiment, illustrated in the accompanying drawings, wherein:
Fig. 1 is a schematic side view illustrating the coffee machine with display system of coffee dispensing parameters and the visual field of an operator standing in front of the coffee machine;
Fig. 2 is a schematic perspective view illustrating the coffee machine with display system of milk frothing parameters and the visual field of an operator standing in front of the coffee machine; and

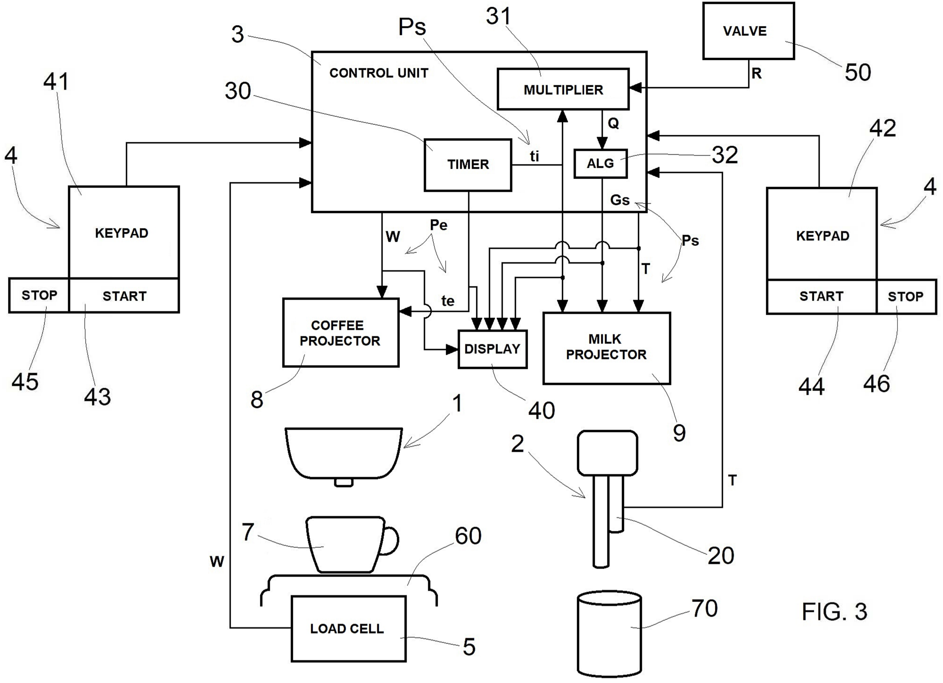

Fig. 3 is a block diagram illustrating the connections between the various components of the coffee machine according to the invention.

With the aid of the Figures, the coffee machine with display system of coffee dispensing and milk frothing parameters according to the invention, which is generally indicated with reference numeral 100, is described.

The coffee machine (100) comprises:
- a boiler for heating water and supplying steam,
- a pump for supplying pressurized water and steam,
- a dispensing unit (1) suitable for dispensing pressurized hot water to extract coffee,
- a steam wand (2) for dispensing pressurized steam to heat and froth milk,
- a control unit (3) for controlling the operating parameters of the coffee machine,
- a user interface (4) comprising a display (40) and a keypad unit (41, 42).

The keypad unit comprises a keypad (41) of the dispensing unit and a keypad (42) of the steam wand. The keyboards (41, 42) comprise respective start buttons (43, 44) to start the dispensing of pressurized hot water to extract the coffee and the dispensing of steam to heat and froth the milk.

The control unit (3) comprises a timer (30). The timer (30) is started when the operator presses the start button (43) of the dispensing unit, in order to count a dispensing time (tₑ), indicative of coffee dispensing, which is sent to the control unit (3) and to the display (40) in order to be seen by the operator.

In addition, the timer (30) is started when the operator presses the start button (44) of the steam wand, in order to count an injection time (tᵢ), indicative of the injection of steam into the milk, which is sent to the control unit (3) and to the display (40) in order to be seen by the operator.

The coffee machine (100) may comprise a load cell (5) disposed under a supporting surface (60) of the frame of the coffee machine and suitable for accommodating a cup (7) disposed under the dispensing unit. In view of the above, the load cell (5) continuously measures a weight (W) of the coffee falling into the cup (7). The weight (W) measured by the load cell is sent to the control unit (3) and to the display (40) in order to be seen by the operator.

The steam wand (2) comprises a temperature probe (20) for detecting the temperature (T) of the milk contained in a jug (70) into which the steam wand (2) is immersed. The temperature (T) measured by the temperature probe (20) is sent to the control unit (3) and to the display (40) to be viewed by the operator.

The coffee machine (100) comprises a proportional valve (50) to regulate the air supply toward the steam wand (2) that generates steam that is injected into the milk to create milk foam. Since the pressure of the air pushed by a compressor and the opening of the shutter of the valve (50) are known, the flow rate (P) of the air supplied to the steam wand is also known.

The flow rate (P) is sent to the control unit (3). The control unit (3) has a multiplier (31) that receives the injection time (tᵢ) and the flow rate (P). In this way, the multiplier (31) multiplies the injection time (tᵢ) by the flow rate (P) to obtain a quantity (Q) indicative of the amount of injected air.

The control unit (3) has an algorithm or look-up table (32) that receives the quantity (Q) and returns a frothing degree (Gs) indicative of milk frothing. The frothing degree (Gs) calculated by the control unit (3) is sent to the display (40) in order to be seen by the operator.

Therefore the display (40) shows:
- dispensing parameters (Pe), such as the dispensing time (tₑ) and the weight (W) of the coffee, which help the operator understand when to stop dispensing coffee, and
- frothing parameters (Ps), such as the temperature (T) of the milk, the injection time (tᵢ) of steam into the milk, and the frothing degree (Gs) of the milk, which help the operator understand when to stop frothing the milk.

Obviously, the keyboard (41) of the dispensing unit and the keyboard (42) of the steam wand have respective stop buttons (45, 46) to stop the coffee dispensing and steam injection cycle.

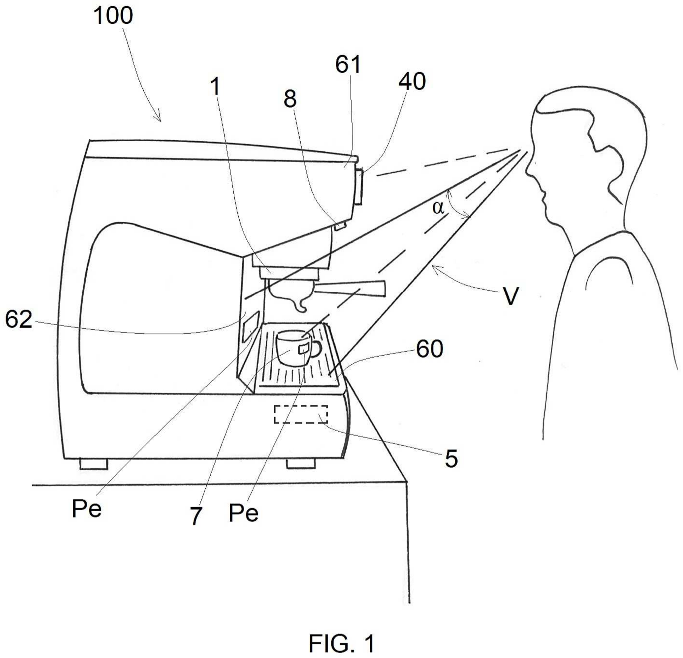

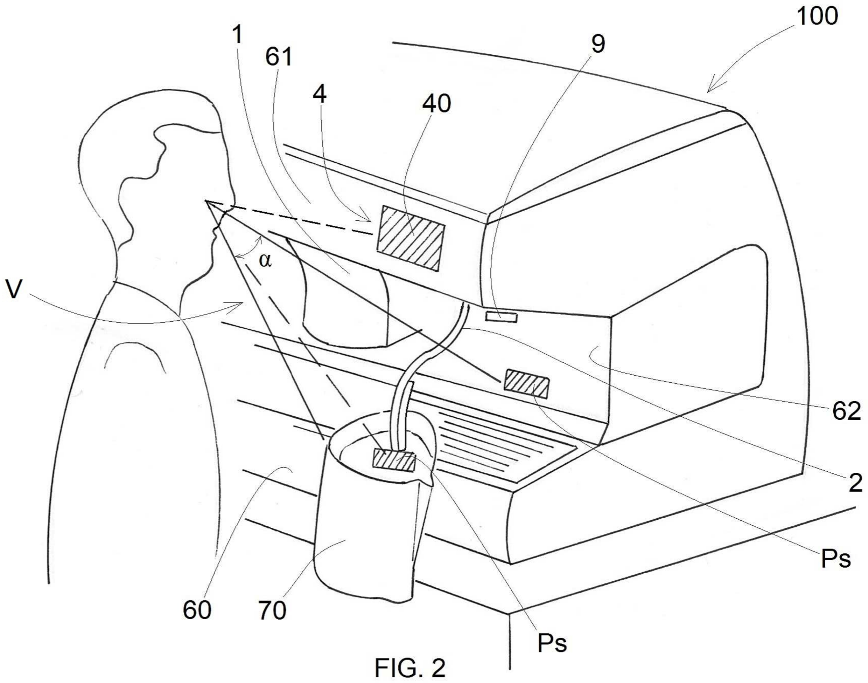

As shown in Figs. 1 and 2, the display (40) is located in an upper portion (61) of the frame of the coffee machine, above the dispensing unit (1) and the steam wand (2).

An operator standing in front of the coffee machine (100), for a detailed view that can be read, has a vertically detailed visual field (V) given an angle (α) of approximately 20-30°.

As seen in Fig. 1, if the operator has the detailed visual field (V) centered on the cup (7), the operator cannot see the display (40) that is not included in his/her visual field.

As shown in Fig. 2, if the operator has the detailed visual field (V) centered on the upper surface of the milk in the jug (70), the operator cannot see the display (40) that is not included in his/her detailed visual field.

In order to solve this problem, as shown in Fig. 1, the coffee machine comprises a coffee projector (8) to project coffee dispensing data or information. The coffee projector (8) is suitable for projecting the dispensing parameters (Pe) in a position included in the operator's detailed visual field (V) centered on the cup.

By way of example, the dispensing parameters (Pe) can be projected onto a front wall (62) of the frame of the coffee machine, behind the cup (7) disposed on the supporting surface (60) under the dispensing unit. Otherwise said, the dispensing parameters (Pe) are projected onto the front wall (62) of the frame between the supporting surface (60) and the dispensing unit (1). The dispensing parameters (Pe) can also be projected onto a front surface of the cup (7). In these cases, the dispensing parameters (Pe) are included in the operator's detailed visual field (V) and can be read even while the operator checks the coffee falling into the cup.

As shown in Fig. 2, the coffee machine comprises a milk projector (9) for projecting milk frothing data or information. The milk projector (9) is suitable for projecting the frothing parameters (Ps) in a position included in the operator's detailed visual field (V) centered on the upper surface of the milk in the jug (70).

By way of example, the frothing parameters (Ps) can be projected onto a front wall (62) of the frame of the coffee machine, behind the jug (70) located under the steam wand. Otherwise said, the frothing parameters (Ps) are projected onto the front wall (62) of the frame, between the supporting surface (60) and the dispensing unit. The frothing parameters (Ps) can also be projected onto a front surface of the jug (70). Advantageously, the frothing parameters (Ps) are projected onto an upper surface of the milk contained in the jug (70). In these cases, the frothing parameters (Ps) are included in the operator's detailed visual field (V) and can be read even while the operator checks the frothing of the milk in the jug (70).

The coffee projector (8) is located in the upper portion (61) of the frame of the coffee machine, above the dispensing unit (1). The milk projector (9) is located in the upper portion (61) of the frame of the coffee machine, above the steam wand (2).

The coffee projector (8) and the milk projector (9) are connected to the control unit (3) to receive the dispensing parameters (Pe) and the frothing parameters (Ps) from the control unit (3), respectively.

The coffee projector (8) and the milk projector (9) may respectively comprise a micro-laser or LED projector with optical lens system focused so as to project the image in the desired position.

Alternatively, the coffee projector (8) and the milk projector (9) may respectively comprise an inverted display that displays an image that is mirrored on the surface where the parameters are to be displayed.

Alternatively, the coffee projector (8) and the milk projector (9) may comprise a HUD system that projects the parameters onto the surface where the parameters are to be displayed.

In the event that the coffee projector (8) and the milk projector (9) project the parameters onto the front wall (62) of the frame of the coffee machine, the front wall (62) is made of mirror-polished stainless steel.

Although the Figures show a coffee machine comprising a dispensing unit (1) and a steam wand (2), the invention also extends to a coffee machine without a steam wand or to a coffee machine with multiple dispensing units and multiple steam wands. In the case of multiple dispensing units and multiple steam wands, there will be multiple projectors, each assigned to the respective dispensing unit steam wand

Numerous variations and detailed modifications can be made to the present embodiment of the invention, within the reach of a person skilled in the art, however falling within the scope of the invention as expressed by the appended claims.

## Claims

1. Coffee machine (100) comprising:
- a dispensing unit (1) suitable for dispensing pressurized hot water to extract liquid coffee,
- a supporting surface (60) of a frame of the coffee machine disposed under the dispensing unit (1) to accommodate a cup (7) in such a way that the coffee dispensed by the dispensing unit (1) falls into the cup,
- a control unit (3) configured to control the dispensing parameters (Pe) indicative of coffee dispensing,
- a user interface (4) comprising a keypad (41) for controlling the dispensing unit,
**characterized by** the fact that it also comprises
- a coffee projector (8) disposed in the frame of the coffee machine and operatively connected to said control unit (3), so as to project at least one dispensing parameter (Pe) in a position included in a detailed visual field (V) of the operator centered on the cup (7) disposed on the supporting surface (60) under the dispensing unit.

2. The coffee machine (100) according to claim 1, wherein said coffee projector (8) is disposed in the frame of the coffee machine so as to project said dispensing parameters (Pe) onto a front wall (62) of the frame of the coffee machine behind the cup (7) disposed on the supporting surface (60) under the dispensing unit and/or onto a front surface of the cup (7) disposed on the supporting surface (60) under the dispensing unit.

3. The coffee machine (100) according to claim 1 or 2, wherein said coffee projector (8) is disposed in an upper portion (61) of the frame of the coffee machine above said dispensing unit (1).

4. The coffee machine (100) according to any one of the preceding claims, wherein said control unit (3) comprises a timer (30); said keypad (41) of the dispensing unit comprises a start button (43) that starts to dispense the coffee and the timer (30) counts a dispensing time (tₑ); and said dispensing parameters (Pe) comprise said dispensing time (tₑ) that is projected in order to be seen by the operator.

5. The coffee machine (100) according to any of the preceding claims, comprising a load cell (5) disposed under said supporting surface (60) for measuring a weight (W) of the coffee in the cup; said load cell (5) being connected to the control unit (3) to send the measured weight (W); and said dispensing parameters (Pe) comprise said weight (W) of the coffee that is projected in order to be seen by the operator.

6. The coffee machine (100) according to any of the preceding claims, wherein said milk projector (9) comprises a laser or LED micro-projector with lens optical system or an inverted display that displays an image that is mirrored on the surface wherein the parameters are to be displayed or a HUD system that projects the parameters onto the surface wherein the parameters are to be displayed.

7. The coffee machine (100) according to any of the preceding claims, comprising a steam wand (2) configured to inject steam into the milk contained in a milk jug (70) so as to froth the milk; the control unit (3) being configured to control frothing parameters (Ps) indicative of milk frothing; the user interface (4) comprising a keypad (42) for controlling the steam wand;
wherein the coffee machine (100) comprises a milk projector (9) disposed in the frame of the coffee machine and operatively connected to said control unit (3), so as to project at least one frothing parameter (Ps) in a position included in a detailed visual field (V) of the operator centered on the milk jug (70) disposed under the steam wand (2).

8. The coffee machine (100) according to claim 7, wherein said milk projector (9) is disposed in the frame of the coffee machine so as to project said frothing parameters (Ps) onto a front wall (62) of the frame of the coffee machine behind the milk jug (70) disposed under the steam wand and/or onto a front surface of the milk jug (70) disposed under the steam wand.

9. The coffee machine (100) according to claim 7 or 8, wherein said milk projector (9) is disposed in the frame of the coffee machine so as to project said frothing parameters (Ps) onto an upper surface of the milk contained in the milk jug (70).

10. The coffee machine (100) according to any of claims 7 to 9, wherein said milk projector (9) is disposed in an upper portion (61) of the frame of the coffee machine, above said steam wand (2).

11. The coffee machine (100) according to any of claims 7 to 10, comprising a temperature probe (20) disposed in said steam wand (2) for measuring a temperature (T) of the milk in the milk jug (70), said temperature probe (20) being connected to the control unit (3) to send the measured temperature (T) and said frothing parameters (Ps) comprise said temperature (T) of the milk that is projected in order to be seen by the operator.

12. The coffee machine (100) according to any of claims 7 to 11, wherein said control unit (3) comprises a timer (30); said keypad (42) of the steam wand comprises a start button (44) that starts to inject the steam and the timer (30) counts an injection time (tᵢ); said control unit (3) is configured to receive a flow rate (P) of the air that is fed to the steam wand and calculate a frothing index (Gs) that depends on an amount (Q) of air given by the flow rate (P) for the injection time (tᵢ) and said frothing parameters (Ps) comprise said frothing index (Gs) that is projected in order to be seen by the operator.
